# EUROPEAN PATENT APPLICATION

(11) **EP 4 648 050 A1**
(43) Date of publication of application: **12.11.2025**
(21) Application number: 25164731.9
(22) Date of filing: 19.03.2025
(51) Int. Cl.: G11B 27/031, H04N 21/2187, H04N 21/2743, H04N 21/433

(54) **REMOTE CONTROL OF CAMERA APPLICATIONS EXECUTING ON CLIENT DEVICES**

(30) Priority: 06.05.2024 US 202463643298 P; 30.05.2024 US 202418678431
(71) Applicant: Apple Inc., Cupertino, CA 95014 (US)
(72) Inventor: INFUSINO, Eugenio J., Cupertino, 95014 (US)
(74) Representative: Zacco Denmark A/S

(57) **Abstract**

A director application executing on a controller device can be paired with multiple camera applications operating on respective client devices. The cameras on the respective client devices can be (a) controlled remotely by the director application in communication with the camera applications or (b) directly through a GUI of the camera applications. The client device can be controlled individually or as a group. Each client device transmits a first version of a live stream to the controller device and stores a second version of the live stream locally. The first version may be a lower quality version or otherwise different than the second version. Edits to attributes of the live stream can be made to the first, lower quality version of the live stream provided to the director device and subsequently applied to a second, higher quality version of the live stream.

## Description

### TECHNICAL FIELD

The disclosure generally relates to controlling and editing live streams from camera applications executing on multiple client devices remotely from a director application executing on a controller device.

### BACKGROUND

Smart phones and other similar devices may be used to capture and record live streams. Compiling and editing recordings of live streams from multiple devices does not occur until after the live stream has terminated.

### OVERVIEW

In some implementations, a director application executing on a controller device can be paired with multiple camera applications operating on respective client devices. The cameras on the respective client devices can be (a) controlled remotely by the director application in communication with the camera applications or (b) directly through a GUI of the camera applications. The client device can be controlled individually or as a group. Each client device transmits a first version of a live stream to the controller device and stores a second version of the live stream locally. The first version may be a lower quality version or otherwise different than the second version. Edits to attributes of the live stream can be made to the first, lower quality version of the live stream provided to the director device and subsequently applied to a second, higher quality version of the live stream.

Particular implementations provide at least the following advantages. The director application provides centralized control over multiple camera applications operating on respective client devices; this allows for streamlined management and coordination of live stream production, eliminating the need to manually control each camera application individually. Remote control of the cameras on the respective client devices through the director application enables flexibility and convenience, allowing users to adjust camera settings, switch between camera angles, and initiate recording or streaming operations from a single interface. The option to control the cameras directly through the GUI of the camera applications provides flexibility for users who prefer to operate the cameras locally while still benefiting from the centralized control and coordination provided by the director application. Control of each client device individually or as a group, depending on preferences and requirements, allows for fine-grained control over specific cameras or simultaneous control over multiple cameras for coordinated actions. Camera applications may accept the configurations received from a director application if the configurations are compatible with the camera and/or other components of the client device. Alternatively, camera applications may select an alternate configuration that is (a) based on the configurations received from the director application and (b) is compatible with the camera and/or other components of the client device. The camera application and director application may execute a negotiation process to determine a configuration that is compatible with the camera and/or other components of the client device and meets the objectives indicated by the director application. Transmitting a first version of the live stream to the controller device in real time allows users to monitor the live stream production centrally and adjust as needed during the live stream. The director application allows users to make edits to attributes of the live stream in real time. These edits can be applied to the first version of the live stream provided to the director device and subsequently to the second version of the live stream later received from the client device enabling dynamic adjustments to the live stream content, such as adding overlays, applying filters, or adjusting audio levels, enhancing the overall quality and presentation of the broadcast.

Details of one or more implementations are set forth in the accompanying drawings and the description below. Other features, aspects, and potential advantages will be apparent from the description, drawings, and the claims.

### DESCRIPTION OF DRAWINGS

FIG. 1 is a block diagram of an example system for controlling and editing live streams from multiple camera applications executing on client devices remotely by a director application executing on a controller device.
FIG. 2 is a flow diagram of an example process for recording a first version of a live stream locally on a client device and concurrently recording remotely a second version of the live stream on a controller device.
FIG. 3 is a flow diagram of an example process for controlling cameras on multiple client devices locally with camera applications executing on the respective client devices and with a remote director application executing on a controller device.
FIG. 4 is a flow diagram of an example process for applying user instructions captured on a controller device in relation to frames of a live stream to corresponding frames of a recording of the live stream.
FIG. 5A is a block diagram of an example system including a controller device and multiple client devices.
FIG. 5B is an interaction diagram illustrating communication of the devices of FIG. 5A.
FIG. 6 is an illustration of a multicamera live stream display on a controller device.
FIG. 7 is a block diagram of an example computing device that can implement the features and processes of FIGS. 1-6.

Like reference symbols in the various drawings indicate like elements.

### DETAILED DESCRIPTION

### Controlling and Editing Multiple Live Streams

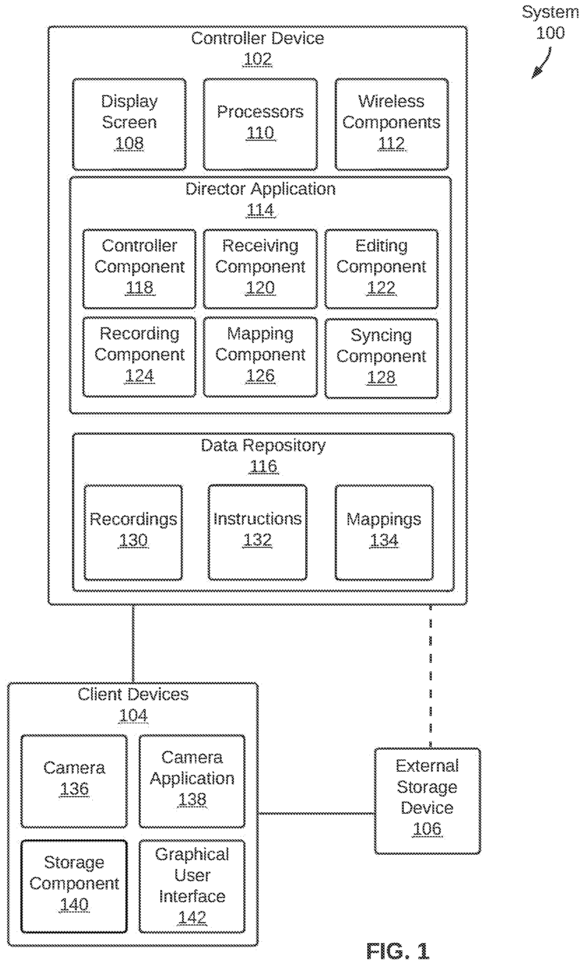

FIG. 1 is a block diagram of an example system 100 for controlling and editing live streams from multiple camera applications executing on client devices remotely by a director application executing on a controller device. The system 100 includes a controller device 102, one or more client devices 104, and an external storage device 106. As will be described in further detail below, the one or more client devices 104 may connect directly to the external storage device 106 or through the controller device 102.

In one or more embodiments, the controller device 102 is a tablet or smartphone. Tablets are designed for general use by individuals and offer a wide range of features, such as web browsing, multimedia consumption, productivity apps, gaming, social media access, and video calls. Examples of tablets include Apple iPad, Samsung Galaxy Tab, and Amazon Fire. The controller device 102 includes a display screen 108, one or more processors 110, one or more wireless components 112, a director application 114, and a data repository 116. In some embodiments, the data repository 116 stores recordings 130, instructions 132, and mappings 134.

In embodiments, the display screen 108 is a touch screen. In this manner, user engagement with the display screen 108, with, for example, a finger or a stylus, allows for user interaction with the director application 114 on the controller device 102.

In some embodiments, the processor 110 on the controller device 102 executes instructions from the director application 114. These instructions are in the form of machine code and encompass operations like arithmetic calculations, data manipulation, and control flow. The processor 110 performs data processing operations and handles tasks like adding numbers, sorting data, performing complex algorithms, and executing software instructions. The processor 110 manages execution of instructions by coordinating data flow and control signals within the CPU. The processor 110 communicates with the memory system of the controller device 102 to retrieve and store data. The processor 110 manages data transfers between different levels of memory hierarchy, such as cache and RAM. In some embodiments, the processor 110 incorporates power management features to optimize energy consumption. The processors 110 may dynamically adjust clock speed, voltage, and power usage based on workload demands, helping to extend battery life of the controller device 102.

In some embodiments, the controller device 102 includes several wireless components 112 that enable connectivity and communication with other devices and networks. The wireless components 112 enable communication of the controller device 102 over Wi-Fi, Bluetooth, and cellular connectivity. Wi-Fi allows the device to connect to wireless local area networks (WLANs) and access the internet. Embodiments may support various Wi-Fi standards, such as 802.11a/b/g/n/ac/ax, providing different levels of speed, range, and compatibility. Bluetooth enables short-range wireless communication between the tablet and other Bluetooth-enabled devices. Wi-Fi allows for connections with accessories like wireless headphones, keyboards, speakers, and other peripherals. Tablets typically support various Bluetooth versions, including the latest Bluetooth 5.0 or higher.

In one or more embodiments, the controller device 102 includes wireless components 112 for utilizing near field communication (NFC) and infrared (IR) blaster. NFC is a wireless technology that enables close-range communication between devices by bringing them into proximity. Devices equipped with NFC can support functions like contactless payments, file transfers, and pairing with other NFC-enabled devices. The infrared blaster allows the controller device 102 to be used as a remote control for various infrared devices like TVs, DVD players, and home entertainment systems. The infrared blaster enables control of compatible devices directly from the controller device 102. Wi-Fi Direct enables the controller device 102 to establish a direct wireless connection with other Wi-Fi Direct-enabled devices without a traditional Wi-Fi network. Examples of services that implement Wi-Fi Direct include Apple AirDrop, Android Nearby Share, Samsung Smart View, Windows 10 Nearby Sharing, Intel WiDi.

In one or more embodiments, the director application 114 includes a controller component 118, a receiving component 120, an editing component 122, a recording component 124, a mapping component 126, and a syncing component 128. Operations described with respect to one component may instead be performed by another component.

In embodiments, the controller component 118 of the director application 114 communicates with a camera application on the one or more client devices 104 to provide a user control of a camera on the respective client device. More particularly, the controller component 118 enables the user to interact with and manipulate various aspects of functionality of the respective cameras. The controller component 118 may initiate and manage pairing between the controller device 102 and the one or more client devices 104. The controller component 118 permits real-time remote control of camera settings and parameters of the one or more client devices 104, including zoom, focus, exposure, and white balance. The control component 118 may also permit grouping of one or more of the client devices such that a command or instruction provided to the grouping is provided to each of the client devices in the group.

In some embodiments, the receiving component 120 of the director application 114 receives and processes the live stream, i.e., video and audio data, from each of the one or more client devices 104.

In embodiments, the editing component 122 of the director application 114 captures the live stream in real time from the one or more client devices 104 and provides the user with features for adjusting attributes of the live stream and applying real-time effects and filters. This may include color correction, brightness/contrast adjustments, blurring, sharpening, or artistic filters to enhance the visual quality or achieve a specific aesthetic. The editing component 122 records the user actions as instructions to be applied to other recorded versions of the live stream at a later time.

In some embodiments, the recording component 124 of the director application 114 records the live stream from the one or more client devices 104. The recording may be saved locally to the data repository 116 or to the external storage device 106. The recording component 124 may also record instructions provided by the user while editing the live stream using the editing component 122 of the director application 114.

In embodiments, the mapping component 126 of the director application 114 provides a mapping between frames in a first version of a live stream and a second version of the live stream. The mapping component 126 may use a variety of techniques and/or algorithms to identify corresponding frames between different versions of a live stream.

In some embodiments, the syncing component 128 of the director application 114 applies the instructions provided by a user during real-time editing of a first version of the live stream to a recorded second version of the live stream. The second version of the live stream may be of higher quality/fidelity than the first version of the live stream.

In one or more embodiments, the data repository 116 includes recordings 130 of the live stream. The recordings 130 may include a first version of a live stream having a low or lower quality/low or lower fidelity and a second version of the live stream having a high or higher quality/high or higher fidelity. The recordings 130 may also include a modified version of the live stream. The modified version is a version of the live stream where the instructions recorded by the editing component 122 of the director application 114 are applied.

In some embodiments, the data repository 116 includes the instructions 132 from the real-time editing of the live stream. The instructions 132 may include increasing or decreasing attributes, e.g., brightness, contrast.

In one or more embodiments, the one or more client devices 104 includes smartphones, tablets, or other devices having a camera 136, a camera application 138 for controlling the camera 136, a storage component 140 for storing recordings of live streams, and a graphical user interface (GUI) 142 for engaging the camera application 138. Examples of smartphones include Apple iPhone, Samsung Galaxy, and Google Pixel.

In embodiments, the camera 136 of the one or more client devices 104 captures the live stream. The camera application 138 provides options for adjusting settings of the camera, including exposure, white balance, and focus. The camera application 138 may provide a variety of filters, effects, and presets that can be applied to the live stream in real time. The camera application 138 may utilize artificial intelligence algorithms to optimize camera settings. The camera application 138 pairs with the director application 114 to permit control of the camera 136 by the director application 114. When a user of the client device provides instructions to the camera application 138 via the GUI 142, any conflicting instructions received by the camera application 138 from the director application 114 are overridden by the camera application 138.

In one or more embodiments, the external storage device 106 includes external hard disk drives, solid state drives, USB flash drives, or memory cards. The external storage device 106 may be directly connected to either or any of the controller device 102 and the one or more client devices 104 wirelessly or through a wired connection. In embodiments, the one or more client devices 104 connect to the external storage device 106 through the controller device 102. In some embodiments, the controller device 102 is unable to access the external storage device 106 that is used by the one or more client devices 104.

### Example Processes

To enable the reader to obtain a clear understanding of the technological concepts described herein, the following processes describe specific steps performed in a specific order. However, one or more of the steps of a particular process may be rearranged and/or omitted while remaining within the contemplated scope of the technology disclosed herein. Moreover, different processes, and/or steps thereof, may be combined, recombined, rearranged, omitted, and/or executed in parallel to create different process flows that are also within the contemplated scope of the technology disclosed herein. Additionally, while the processes below may omit or briefly summarize some of the details of the technologies disclosed herein for clarity, the details described in the paragraphs above may be combined with the process steps described below for a more complete and comprehensive understanding of these processes and the technologies disclosed herein.

### Concurrent Local and Remote Live Stream Recording

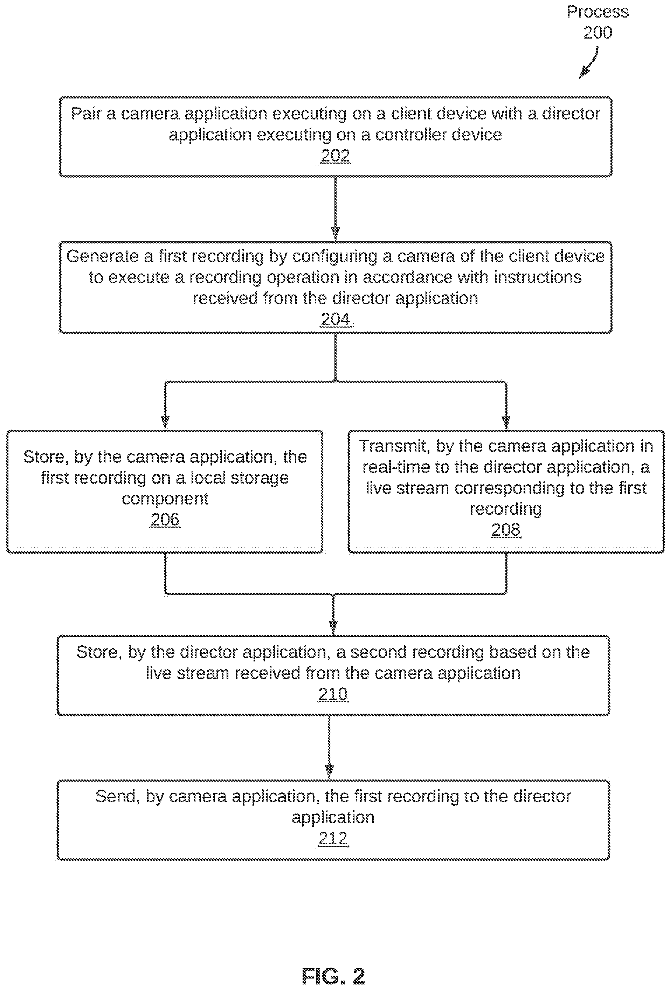

FIG. 2 is a flow diagram of an example process 200 for recording a first version of a live stream locally on a client device and concurrently recording remotely a second version of the live stream on a controller device.

One or more embodiments pair a camera application executing on a client device with a director application executing on a controller device (Operation 202). The controller device and the client device may be directly paired with one another using Bluetooth or another form of NFC for point to point communication. Pairing the client device with the controller device may include (a) receiving a request from the controller device to pair with the client device, (b) receiving a request from the controller device for a personal identification number (PIN), (c) the client device sending a PIN to the controller device, and (d) in response to verifying the PIN, establishing a connection between the client device and the controller.

In one or more embodiments, the camera application generates a first recording by configuring a camera of the client device to execute a recording operation in accordance with instructions received from the director application (Operation 204). Using the director application of the controller device, a user may provide instructions that are received by the camera application of the client device to start and stop the recording operation by the camera application. The director application may also be used to configure the camera of the client device. Instructions may include resolution, frame rate, duration, and storage location. The first recording may be of a high or higher quality/fidelity.

In one or more embodiments, the camera application stores the first recording on a local storage component (Operation 206). The camera application may store the first recording locally on the client device. Alternatively, the camera application stores the first recording on an external storage device connected to the client device. The external storage device may be connected to the client device wirelessly or by a cable.

In one or more embodiments, the camera applications transmits in real time to the director application, a live stream corresponding to the first recording (Operation 208). Upon receiving a command from the director application, the camera application begins transmitting the live stream from the client device to the director application in real time. This process involves encoding the video and audio data and transmitting the encoded video and audio data to the director application. One or more characteristics of the live stream provided to the director application may be different from the live stream recorded by the camera application. For example, the live stream provided to the director application in real time may be of a low or lower quality/fidelity than a version of the live stream stored locally on the client device. The camera application may store a lower quality version or same quality version as a backup in case the transmission to the director application fails.

In one or more embodiments, the director application stores a second recording based on the live stream received from the camera application (Operation 210). Upon receiving a command to start recording, the director application initiates the recording process. The director application captures the incoming live stream from the camera application and saves the live stream as a second recording. The live stream may be stored locally in storage on the controller device or to an external storage device. The director application monitors the recording process, ensuring that the live stream is being captured and stored correctly. The second recording may include any instructions provided to the director application that modifies or adjusts attributes of the incoming live stream.

In one or more embodiments the camera application sends the first recording to the director application (Operation 212). Subsequent to a termination of recording the live stream, the camera application sends the first recording that was stored locally to the director application.

### Dual Control of Camera on Client Device

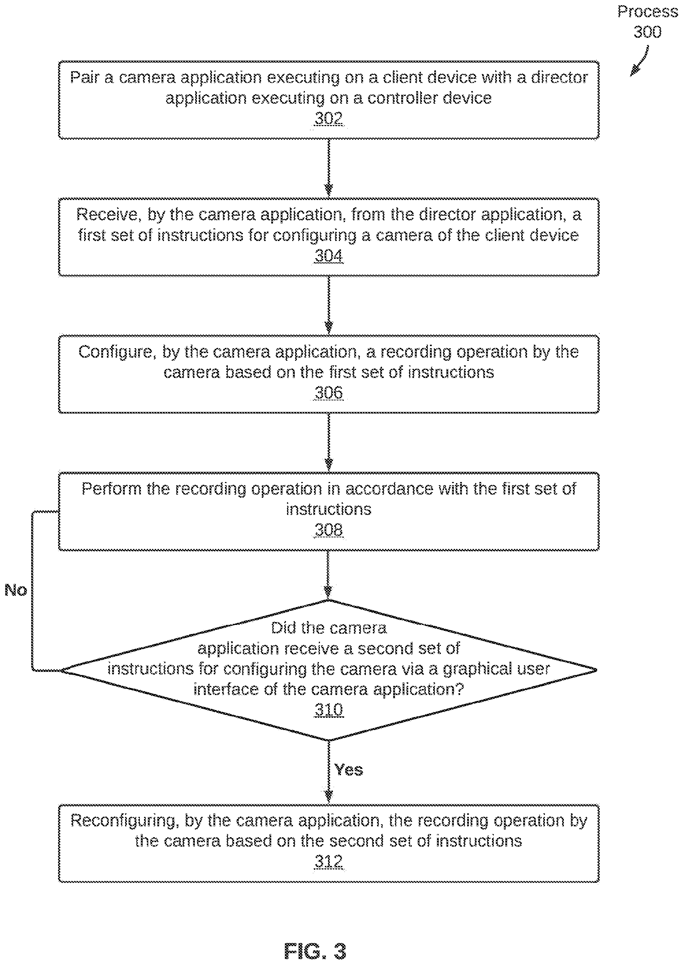

FIG. 3 is a flow diagram of an example process 300 for controlling cameras on a plurality of client devices locally with camera applications for the respective client devices and with a remote director application.

One or more embodiments pair a camera application executing on a client device with a director application executing on a controller device (Operation 302). The camera application may be paired with the director application as described above in Operation 202.

In one or more embodiments, the camera application receives from the director application, a first set of instructions for configuring a camera of the client device (Operation 304). Once paired, the camera application may receive the first set of instructions from the director application. These instructions may include various attributes, including resolution, frame rate, exposure, focus, and white balance. Camera applications may accept the configurations received from a director application if the configurations are compatible with the camera and/or other components of the client device. Alternatively, camera applications may select an alternate configuration that is (a) based on the configurations received from the director application and (b) is compatible with the camera and/or other components of the client device. The camera application and director application may execute a negotiation process to determine a configuration that is compatible with the camera and/or other components of the client device and meets the objectives indicated by the director application.

In one or more embodiments, the camera application configures a recording operation by the camera based on the first set of instructions (Operation 306). The camera application parses the received instructions and applies the instructions to configure the camera settings in accordance with the instructions. The camera application adjusts the camera's resolution, frame rate, exposure, focus, white balance, and other parameters based on the specified values.

One or more embodiments perform the recording operation in accordance with the first set of instructions (Operation 308). Once the camera settings have been configured according to the instructions received from the director application, the camera application initiates the recording operation. The camera application starts capturing video footage using the configured settings, including, for example specified resolution, frame rate, and/or duration.

One or more embodiments determine if the camera application received a second set of instructions for configuring the camera via a GUI of the camera application (Operation 310). A user may use the GUI of the camera application to provide instructions for configuring the camera. When the user has not provided instructions via the GUI of the camera application for configuring the camera of the client device, the recording operation continues according to the instructions received from the director application.

In one or more embodiments, the camera application reconfigures the recording operation by the camera based on the second set of instructions (Operation 312). When the user has provided instructions via the GUI of the camera application for configuring the camera, the instructions provided via the GUI of the camera application override the instructions provided by the director application.

### Applying Captured Instructions to a Recording of the Live Stream

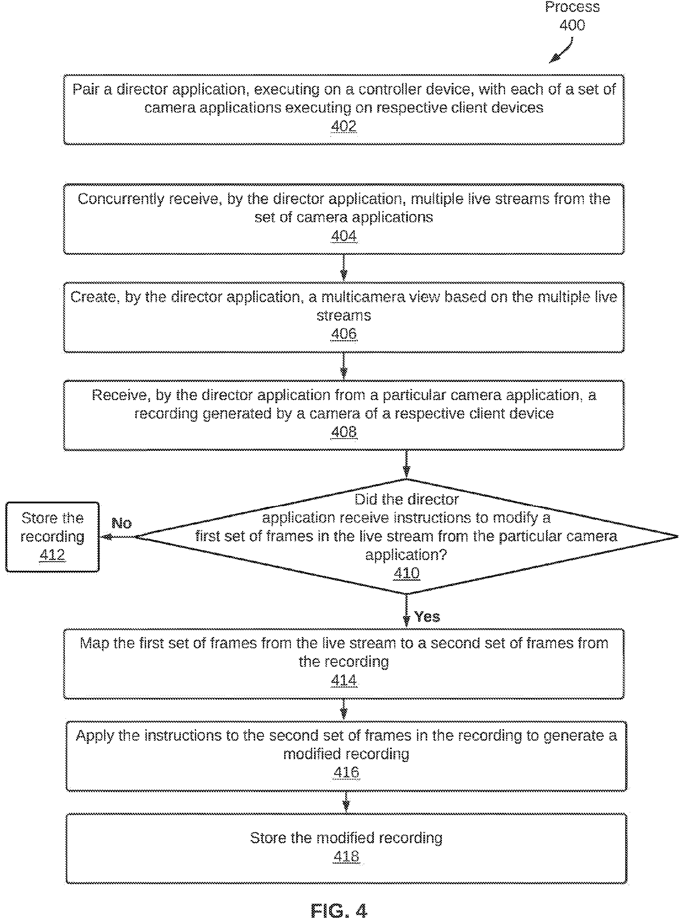

FIG. 4 is a flow diagram of an example process 400 for applying user instructions captured on a controller device with relation to frames of a live stream to corresponding frames of a recording of the live stream.

One or more embodiments pair a director application, executing on a controller device, with each of a set of camera applications executing on respective client devices (Operation 402). Each set of camera applications executing on respective client devices is paired in the manner described above in Operation 202.

In one or more embodiments, the director application concurrently receives multiple live streams from the set of camera applications (Operation 404). For each connected camera application, the director application requests a live stream of video footage. The director application sends commands to the camera applications to start transmitting a live stream from their respective cameras. The director application receives the live stream from the camera applications in real time. Each live stream is identified and processed separately, allowing the director application to handle multiple streams concurrently.

In one or more embodiments, the director application creates a multicamera view based on the multiple live streams (Operation 406). Based on user preferences or predefined layouts, the director application arranges the live streams into a multicamera view. This may involve dividing the screen into multiple sections or tiles, with each section displaying a different live stream from a camera application. The director application may provide options for customizing the layout of the multicamera view. Users can adjust the size, position, and orientation of each stream within the multicamera view to create the desired layout. The director application displays the live streams within the multicamera view, allowing users to monitor multiple camera feeds simultaneously. Each stream is displayed in real time, providing a comprehensive view of the scene from different perspectives.

In one or more embodiments, the director application receives from a particular camera application, a recording generated by a camera of a respective client device (Operation 408). Either in response to the director application sending a request to the camera application, requesting the recording, or automatically upon termination of the live stream, the particular camera application sends the recording to the director application. When sent in response to a request, the request may include details such as the recording's timestamp, duration, or file name. In some embodiments, the recording is sent by the camera application using a file transfer protocol over the connection established between the two applications. The director application receives the recording sent by the camera application. The director application may verify the integrity of the recording.

One or more embodiments determine if the director application received instructions to modify a first set of frames in the live stream from the particular camera application (Operation 410). A user may provide instructions via the director application to modify frames in the live stream. The instructions may include color correction, brightness/contrast adjustments, blurring, sharpening, or artistic filters to enhance the visual quality or achieve a specific aesthetic. When the director application determines that no instructions have been received, the director application stores the recording (Operation 412). The recording is saved to a designated storage location. The designated storage location may be a component of the controller device or (b) an external storage device accessible by the controller device.

One or more embodiments map the first set of frames from the live stream to a second set of frames from the recording (Operation 414). Mapping the first set of frames to the second set of frames may include frame synchronization and identifying matching frames. Initially, the director application synchronizes the recording of the live stream and the recording received from the camera application to ensure that both begin from the same starting point. This can be achieved by using timestamps or other synchronization mechanisms to match frames between the two sources. The director application may then compare frames from the live stream with frames from the recording to identify matching frames that correspond to each other. This can be done by analyzing the content of the frames and finding similarities or patterns between them. Once matching frames are identified, the director application establishes a mapping between the first set of frames from the live stream and the second set of frames from the recording. This mapping indicates the frame from the live stream corresponds to the frame from the recording. The director application may then create a data structure to store the mapping between frames. This data structure can be a list, array, or dictionary that associates each frame from the live stream with its corresponding frame from the recording.

One or more embodiments apply the instructions to the second set of frames in the recording to generate a modified recording (Operation 416). A recording component of the director application parses the received instructions to understand the requested modifications. These instructions may include commands for adding overlays, applying filters, adjusting colors, or other visual effects. The recording component reads the frames from the recording, accessing the second set of frames to which the modifications will be applied. Based on the parsed instructions, the recording component applies the specified modifications to the second set of frames in the recording. This involves processing each frame according to the provided instructions, such as adding overlays, adjusting colors, or applying filters.

One or more embodiments store the modified recording (Operation 418). After applying the modifications, the recording component writes the modified frames to a new recording file. This creates a modified version of the original recording with the requested changes applied to the second set of frames. The recording is saved to a designated storage location. The designated storage location may be a component of the controller device or (b) an external storage device accessible by the controller device.

### Graphical User Interfaces

This disclosure above describes various Graphical User Interfaces (GUIs) for implementing various features, processes, or workflows. These GUIs can be presented on a variety of electronic devices, including but not limited to laptop computers, desktop computers, computer terminals, television systems, tablet computers, e-book readers, and smart phones. One or more of these electronic devices can include a touch-sensitive surface. The touch-sensitive surface can process multiple simultaneous points of input, including processing data related to the pressure, degree, or position of each point of input. Such processing can facilitate gestures with multiple fingers, including pinching and swiping.

When the disclosure refers to "select" or "selecting" user interface elements in a GUI, these terms are understood to include clicking or "hovering" with a mouse or other input device over a user interface element or touching, tapping, or gesturing with one or more fingers or stylus on a user interface element. User interface elements can be virtual buttons, menus, selectors, switches, sliders, scrubbers, knobs, thumbnails, links, icons, radio buttons, checkboxes, and any other mechanism for receiving input from, or providing feedback to, a user.

### Example System Including Controller Device and Multiple Client Devices

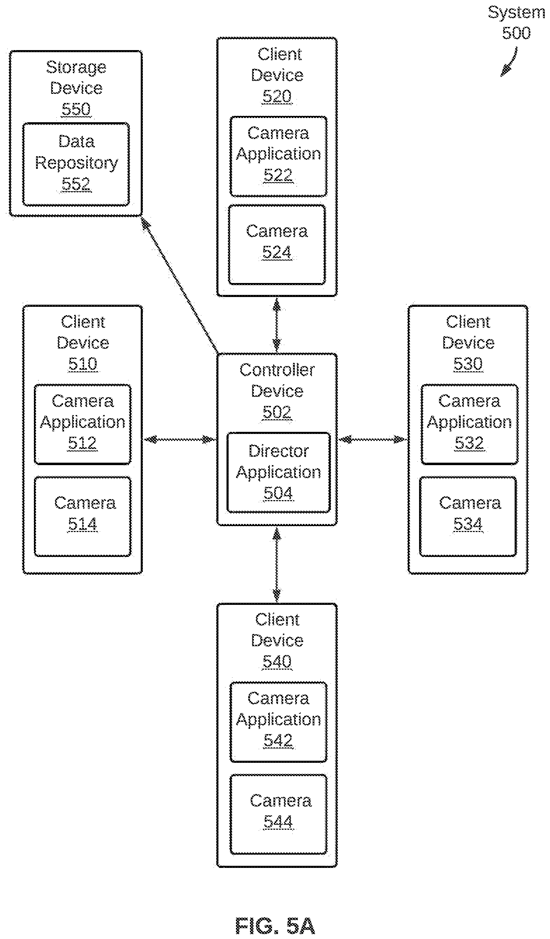

FIG. 5A is a block diagram of an example system including a controller device and multiple client devices. More particularly, the system 500 includes a controller device 502 connected to multiple client devices 510, 520, 530, 540. The controller device 502 is executing a director application 504. Each of the multiple client devices 510, 520, 530, 540 is executing a camera application 512, 522, 532, 542 and includes a camera 514, 524, 534, 544. Each of the camera applications 512, 522, 532, 542 of the respective client devices 510, 520, 530, 540 is paired with the director application 504 of the controller device 502.

An external storage device 550 is connected to the controller device 502 and includes a data repository 552 for storing recordings from the controller device 502 and/or the client devices 510, 520, 530, 540. Each of the multiple client devices 510, 520, 530, 540 may be connected to the external storage device 550 through the controller device 502 or directly via a wireless connection or with a cable.

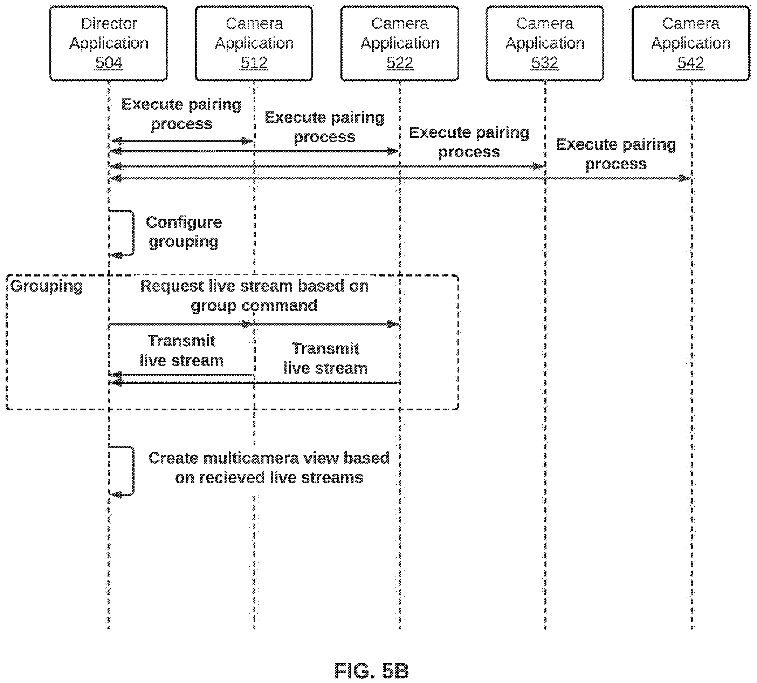

FIG. 5B illustrates an interaction diagram for the system 500. Initially, the director application 504 executes a pairing process with each of the camera applications 512, 522, 532, 542. Once paired with the camera applications 512, 522, 532, 542, the director application configures a grouping including two of the camera applications 512, 522. Based on the grouping of the two camera applications 512, 522, the director application requests a live stream from the two camera applications 512, 522. In response to the request for a live stream, each of the two camera applications 512, 522 initiates transmission of the live stream. In response to receipt of the live stream, the director application 504 creates a multicamera view.

### Example Multicamera View

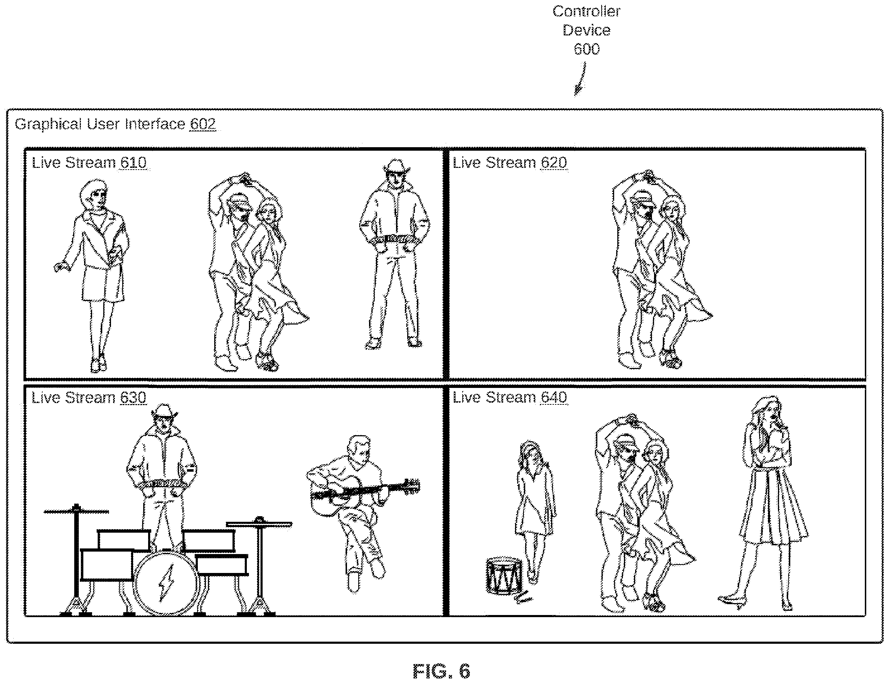

FIG. 6 illustrates a block diagram of an example multicamera view. More particularly, a controller device 600, i.e., tablet, includes a GUI 602. The GUI 602 is divided into quadrants with a live stream 610 from a first client device (not shown) appearing in an upper left quadrant, a live stream 620 from a second client device (not shown) appearing in top right quadrant, a live stream 630 from a third client device (not shown) appearing in a lower left quadrant, and a live stream 640 from a fourth client device (not shown) appearing in a bottom right quadrant.

In embodiments, a toolbar (not shown) may be accessed for each of the live streams 610, 620, 630, 640 by tapping the GUI 602 within each of the respective quadrants. The toolbar provides interface elements for editing the respective live streams and/or controlling the camera of the respective client device from which the live stream is provided. The toolbar may also provide interface elements for configuring one or more grouping of the client devices from which the live streams are provided.

### Example System Architecture

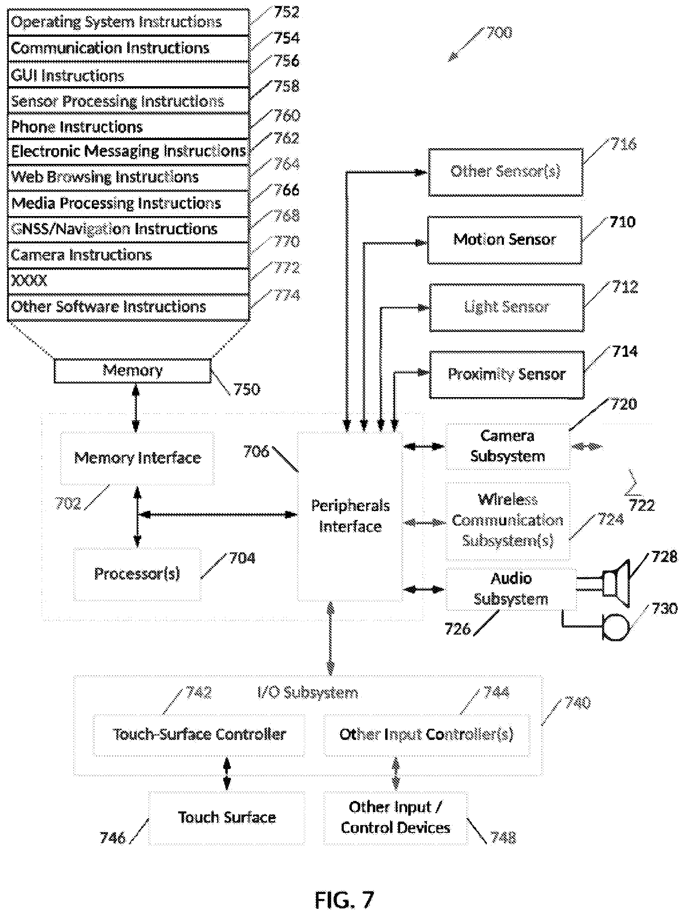

FIG. 7 is a block diagram of an example computing device 700 that can implement the features and processes of FIGS. 1-6. The computing device 700 can include a memory interface 702, one or more data processors, image processors and/or central processing units 704, and a peripherals interface 706. The memory interface 702, the one or more processors 704, and/or the peripherals interface 706 can be separate components or can be integrated in one or more integrated circuits. The various components in the computing device 700 can be coupled by one or more communication buses or signal lines.

Sensors, devices, and subsystems can be coupled to the peripherals interface 706 to facilitate multiple functionalities. For example, a motion sensor 710, a light sensor 712, and a proximity sensor 714 can be coupled to the peripherals interface 706 to facilitate orientation, lighting, and proximity functions. Other sensors 716 can also be connected to the peripherals interface 706, such as a global navigation satellite system (GNSS) (e.g., GPS receiver), a temperature sensor, a biometric sensor, magnetometer, or other sensing device to facilitate related functionalities.

A camera subsystem 720 and an optical sensor 722, e.g., a charged coupled device (CCD) or a complementary metal-oxide semiconductor (CMOS) optical sensor, can be utilized to facilitate camera functions, such as recording photographs and video clips. The camera subsystem 720 and the optical sensor 722 can be used to collect images of a user to be used during authentication of a user, e.g., by performing facial recognition analysis.

Communication functions can be facilitated through one or more wireless communication subsystems 724 that can include radio frequency receivers and transmitters and/or optical (e.g., infrared) receivers and transmitters. The specific design and implementation of the communication subsystem 724 can depend on the communication network(s) over which the computing device 700 is intended to operate. For example, the computing device 700 can include communication subsystems 724 designed to operate over a GSM network, a GPRS network, an EDGE network, a Wi-Fi or WiMax network, and a Bluetooth^{™} network. In particular, the wireless communication subsystems 724 can include hosting protocols such that the device 700 can be configured as a base station for other wireless devices.

An audio subsystem 726 can be coupled to a speaker 728 and a microphone 730 to facilitate voice-enabled functions, such as speaker recognition, voice replication, digital recording, and telephony functions. The audio subsystem 726 can be configured to facilitate processing voice commands, voice printing, and voice authentication, for example.

The I/O subsystem 740 can include a touch-surface controller 742 and/or other input controller(s) 744. The touch-surface controller 742 can be coupled to a touch surface 746. The touch surface 746 and touch-surface controller 742 can, for example, detect contact and movement or break thereof using any of a plurality of touch sensitivity technologies, including but not limited to capacitive, resistive, infrared, and surface acoustic wave technologies as well as other proximity sensor arrays or other elements for determining one or more points of contact with the touch surface 746.

The other input controller(s) 744 can be coupled to other input/control devices 748, such as one or more buttons, rocker switches, thumbwheel, infrared port, USB port, and/or a pointer device such as a stylus. The one or more buttons (not shown) can include an up/down button for volume control of the speaker 728 and/or the microphone 730.

In one implementation, a pressing of the button for a first duration can disengage a lock of the touch surface 746, and a pressing of the button for a second duration that is longer than the first duration can turn power to the computing device 700 on or off. Pressing the button for a third duration can activate a voice control, or voice command, module that enables the user to speak commands into the microphone 730 to cause the device to execute the spoken command. The user can customize a functionality of one or more of the buttons. The touch surface 746 can, for example, also be used to implement virtual or soft buttons and/or a keyboard.

In some implementations, the computing device 700 can present recorded audio and/or video files, such as MP3, AAC, and MPEG files. In some implementations, the computing device 700 can include the functionality of an MP3 player such as an iPod^{™}.

The memory interface 702 can be coupled to memory 750. The memory 750 can include high-speed random-access memory and/or non-volatile memory, such as one or more magnetic disk storage devices, one or more optical storage devices, and/or flash memory (e.g., NAND, NOR). The memory 750 can store an operating system 752, such as Darwin, RTXC, LINUX, UNIX, OS X, WINDOWS, or an embedded operating system such as VxWorks.

The operating system 752 can include instructions for handling basic system services and for performing hardware dependent tasks. In some implementations, the operating system 752 can be a kernel (e.g., UNIX kernel). In some implementations, the operating system 752 can include instructions for controlling and editing live streams from multiple camera applications executing on client devices remotely by a director application executing on a controller device. For example, operating system 752 can implement the control and editing features as described with reference to FIGS. 1-6.

The memory 750 can also store communication instructions 754 to facilitate communicating with one or more additional devices, one or more computers, and/or one or more servers. The memory 750 can include the following: graphical user interface instructions 756 to facilitate graphic user interface processing; sensor processing instructions 758 to facilitate sensor-related processing and functions; phone instructions 760 to facilitate phone-related processes and functions; electronic messaging instructions 762 to facilitate electronic-messaging related processes and functions; web browsing instructions 764 to facilitate web browsing-related processes and functions; media processing instructions 766 to facilitate media processing-related processes and functions; GNSS/Navigation instructions 768 to facilitate GNSS and navigation-related processes and instructions; and/or camera instructions 770 to facilitate camera-related processes and functions.

The memory 750 can store software instructions 772 to facilitate other processes and functions, such as the controlling and editing processes and functions as described with reference to FIGS. 1-6.

The memory 750 can also store other software instructions 774, such as web video instructions to facilitate web video-related processes and functions and/or web shopping instructions to facilitate web shopping-related processes and functions. **In** some implementations, the media processing instructions 766 are divided into audio processing instructions and video processing instructions to facilitate audio processing-related processes and functions as well as video processing-related processes and functions, respectively.

Each of the above identified instructions and applications can correspond to a set of instructions for performing one or more functions described above. These instructions need not be implemented as separate software programs, procedures, or modules. The memory 750 can include additional instructions or fewer instructions. Furthermore, various functions of the computing device 700 can be implemented in hardware and/or in software, including in one or more signal processing and/or application specific integrated circuits.

To aid the Patent Office and any readers of any patent issued on this application in interpreting the claims appended hereto, applicants wish to note that they do not intend any of the appended claims or claim elements to invoke 35 U.S.C. 112(f) unless the words "means for" or "step for" are explicitly used in the particular claim.

Exemplary methods, systems, and non-transitory computer readable media are set out in the following items.
1. One or more non-transitory computer readable media including one or more sequences of instructions that, when executed by one or more processors, cause the processors to perform operations comprising:
   executing a camera application on a client device comprising a camera and a graphical user interface;
   generating, by the camera application, a first recording by configuring the camera to execute a recording operation in accordance with instructions received from a director application executing on a controller device;
   storing, by the camera application, the first recording on a local storage component of the client device; and
   concurrently with storing the first recording on the local storage component of the client device: transmitting, by the camera application in real-time to the director application, a live stream corresponding to the first recording,
   wherein the director application stores, on the controller device or a secondary storage device, a second recording based on the live stream received from the camera application.
2. The one or more non-transitory computer readable media of Item 1, wherein the first recording is identical to the second recording.
3. The one or more non-transitory computer readable media of Item 1, wherein the operations further comprise:
   generating the live stream based on a set of instructions received from the director application executing on the controller device.
4. The one or more non-transitory computer readable media of Item 1, wherein the operations further comprise:
   generating the live stream by modifying at least one attribute of the first recording,
   wherein the second recording, that is based on the live stream, is different from the first recording.
5. The one or more non-transitory computer readable media of Item 1, wherein the first recording is of a higher quality than the second recording.
6. The one or more non-transitory computer readable media of Item 1, wherein one or more attributes of the first recording and the second recording are different, and wherein the operations further comprise:
   subsequent to completing the generation of the first recording, transmitting the first recording to (a) the director application or (b) a storage component that is accessible by the director application.
7. The one or more non-transitory computer readable media of Item 1, wherein the operations further comprise: pairing the client device with the controller device,
   wherein paring includes a direct wireless connection between the client device and the controller device.
8. A method comprising:
   executing a camera application on a client device comprising a camera and a graphical user interface;
   generating, by the camera application, a first recording by configuring the camera to execute a recording operation in accordance with instructions received from a director application executing on a controller device;
   storing, by the camera application, the first recording on a local storage component of the client device;
   concurrently with storing the first recording on the local storage component of the client device: transmitting, by the camera application in real-time to the director application, a live stream corresponding to the first recording;
   wherein the director application stores, on the controller device or a secondary storage device, a second recording based on the live stream received from the camera application.
9. The method of Item 8, wherein the first recording is identical to the second recording.
10. The method of Item 8, further comprising:
   generating the live stream based on a set of instructions received from the director application executing on the controller device.
11. The method of Item 8, further comprising:
   generating the live stream by modifying at least one attribute of the first recording,
   wherein the second recording, that is based on the live stream, is different from the first recording.
12. The method of Item 8, wherein the first recording is of a higher quality than the second recording.
13. The method of Item 8, wherein one or more attributes of the first recording and the second recording are different, and further comprising:
   subsequent to completing the generation of the first recording, transmitting the first recording to (a) the director application or (b) a storage component that is accessible by the director application.
14. The method of Item 8, wherein the operations further comprise:
   pairing the client device with the controller device, wherein paring includes a direct wireless connection between the client device and the controller device.
15. A system comprising:
   one or more processors; and
   a non-transitory computer-readable medium including one or more sequences of instructions that, when executed by one or more processors, cause the processors to perform operations comprising:
      executing a camera application on a client device comprising a camera and a graphical user interface;
      generating, by the camera application, a first recording by configuring the camera to execute a recording operation in accordance with instructions received from a director application executing on a controller device;
      storing, by the camera application, the first recording on a local storage component of the client device;
      concurrently with storing the first recording on the local storage component of the client device: transmitting, by the camera application in real-time to the director application, a live stream corresponding to the first recording;
      wherein the director application stores, on the controller device or a secondary storage device, a second recording based on the live stream received from the camera application.
16. The system of Item 15, wherein the first recording is identical to the second recording.
17. The system of Item 15, wherein the operations further comprise: generating the live stream based on a set of instructions received from the director application executing on the controller device.
18. The system of Item 15, wherein the operations further comprise:
   generating the live stream by modifying at least one attribute of the first recording,
   wherein the second recording, that is based on the live stream, is different from the first recording.
19. The system of Item 15, wherein the first recording is of a higher quality than the second recording.
20. The system of Item 15, wherein one or more attributes of the first recording and the second recording are different, and wherein the operations further comprise:
   subsequent to completing the generation of the first recording, transmitting the first recording to (a) the director application or (b) a storage component that is accessible by the director application.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. One or more non-transitory computer readable media including one or more sequences of instructions that, when executed by one or more processors, cause the processors to perform operations comprising:
executing a camera application on a client device comprising a camera and a graphical user interface;
generating, by the camera application, a first recording by configuring the camera to execute a recording operation in accordance with instructions received from a director application executing on a controller device;
storing, by the camera application, the first recording on a local storage component of the client device; and
concurrently with storing the first recording on the local storage component of the client device: transmitting, by the camera application in real-time to the director application, a live stream corresponding to the first recording,
wherein the director application stores, on the controller device or a secondary storage device, a second recording based on the live stream received from the camera application.

2. The one or more non-transitory computer readable media of Claim 1, wherein the first recording is identical to the second recording.

3. The one or more non-transitory computer readable media of Claim 1, wherein the operations further comprise:
generating the live stream based on a set of instructions received from the director application executing on the controller device.

4. The one or more non-transitory computer readable media of Claim 1, wherein the operations further comprise:
generating the live stream by modifying at least one attribute of the first recording,
wherein the second recording, that is based on the live stream, is different from the first recording.

5. The one or more non-transitory computer readable media of Claim 1, wherein the first recording is of a higher quality than the second recording.

6. The one or more non-transitory computer readable media of Claim 1, wherein one or more attributes of the first recording and the second recording are different, and wherein the operations further comprise:
subsequent to completing the generation of the first recording, transmitting the first recording to (a) the director application or (b) a storage component that is accessible by the director application.

7. The one or more non-transitory computer readable media of Claim 1, wherein the operations further comprise: pairing the client device with the controller device,
wherein paring includes a direct wireless connection between the client device and the controller device.

8. A method comprising:
executing a camera application on a client device comprising a camera and a graphical user interface;
generating, by the camera application, a first recording by configuring the camera to execute a recording operation in accordance with instructions received from a director application executing on a controller device;
storing, by the camera application, the first recording on a local storage component of the client device;
concurrently with storing the first recording on the local storage component of the client device: transmitting, by the camera application in real-time to the director application, a live stream corresponding to the first recording;
wherein the director application stores, on the controller device or a secondary storage device, a second recording based on the live stream received from the camera application.

9. The method of Claim 8, wherein the first recording is identical to the second recording.

10. The method of Claim 8, further comprising:
generating the live stream based on a set of instructions received from the director application executing on the controller device.

11. The method of Claim 8, further comprising:
generating the live stream by modifying at least one attribute of the first recording,
wherein the second recording, that is based on the live stream, is different from the first recording.

12. The method of Claim 8, wherein the first recording is of a higher quality than the second recording.

13. The method of Claim 8, wherein one or more attributes of the first recording and the second recording are different, and further comprising:
subsequent to completing the generation of the first recording, transmitting the first recording to (a) the director application or (b) a storage component that is accessible by the director application.

14. The method of Claim 8, wherein the operations further comprise:
pairing the client device with the controller device, wherein paring includes a direct wireless connection between the client device and the controller device.

15. A system comprising:
one or more processors; and
a non-transitory computer-readable medium including one or more sequences of instructions that, when executed by one or more processors, cause the processors to perform operations comprising:
executing a camera application on a client device comprising a camera and a graphical user interface;
generating, by the camera application, a first recording by configuring the camera to execute a recording operation in accordance with instructions received from a director application executing on a controller device;
storing, by the camera application, the first recording on a local storage component of the client device;
concurrently with storing the first recording on the local storage component of the client device: transmitting, by the camera application in real-time to the director application, a live stream corresponding to the first recording;
wherein the director application stores, on the controller device or a secondary storage device, a second recording based on the live stream received from the camera application.

16. The system of Claim 15, wherein the first recording is identical to the second recording.

17. The system of Claim 15, wherein the operations further comprise: generating the live stream based on a set of instructions received from the director application executing on the controller device.

18. The system of Claim 15, wherein the operations further comprise:
generating the live stream by modifying at least one attribute of the first recording,
wherein the second recording, that is based on the live stream, is different from the first recording.

19. The system of Claim 15, wherein the first recording is of a higher quality than the second recording.

20. The system of Claim 15, wherein one or more attributes of the first recording and the second recording are different, and wherein the operations further comprise:
subsequent to completing the generation of the first recording, transmitting the first recording to (a) the director application or (b) a storage component that is accessible by the director application.
